# EUROPÄISCHE PATENTSCHRIFT

(11) **EP 0 521 260 B1**
(45) Veröffentlichungstag und Bekanntmachung des Hinweises auf die Patenterteilung: **12.07.1995**
(21) Anmeldenummer: 92107788.9
(22) Anmeldetag: 08.05.1992
(51) Int. Cl.: H02H 7/122

(54) **Verfahren und Vorrichtung zum Abschalten eines Uberstromes bei einem Wechselrichter**
Procedure and device for switching off an overcurrent at an inverter circuit
Procédé et dispositif pour couper un courant de surcharge dans un onduleur

(30) Priorität: 15.05.1991 DE 4115856
(43) Veröffentlichungstag der Anmeldung: 07.01.1993
(73) Patentinhaber: ABB PATENT GmbH, 68309 Mannheim (DE)
(72) Erfinder: Wallisch, Ulrich, W-6840 Lampertheim (DE); Werle, Ludwig, W-6900 Heidelberg (DE); Huber, Hans-Dieter, W-6804 Ilvesheim (DE)
(74) Vertreter: Rupprecht, Klaus, Dipl.-Ing.

(56) Entgegenhaltungen:
- DE-A- 2 807 999
- DE-A- 3 032 328
- DE-A- 3 542 752
- DE-A- 3 544 232
- DE-A- 3 737 327
- DE-B- 2 660 319
- US-A- 4 410 935
- US-A- 4 660 137
- ETZ ELEKTROTECHNIK UND AUTOMATION FÜR EXPERTEN, Heft 10, 110. Jahrgang, Mai 1989 ; W. BÖSTERLING et al. : "IGBT-Module in Stromrichtern : regeln, steuern, schützen"

## Beschreibung

Die Erfindung bezieht sich auf ein Verfahren zum Abschalten eines Überstromes bei einem Wechselrichter gemäß dem Oberbegriff des Anspruchs 1 sowie auf eine Vorrichtung zur Durchführung des Verfahrens gemäß dem Oberbegriff des Anspruchs 7.

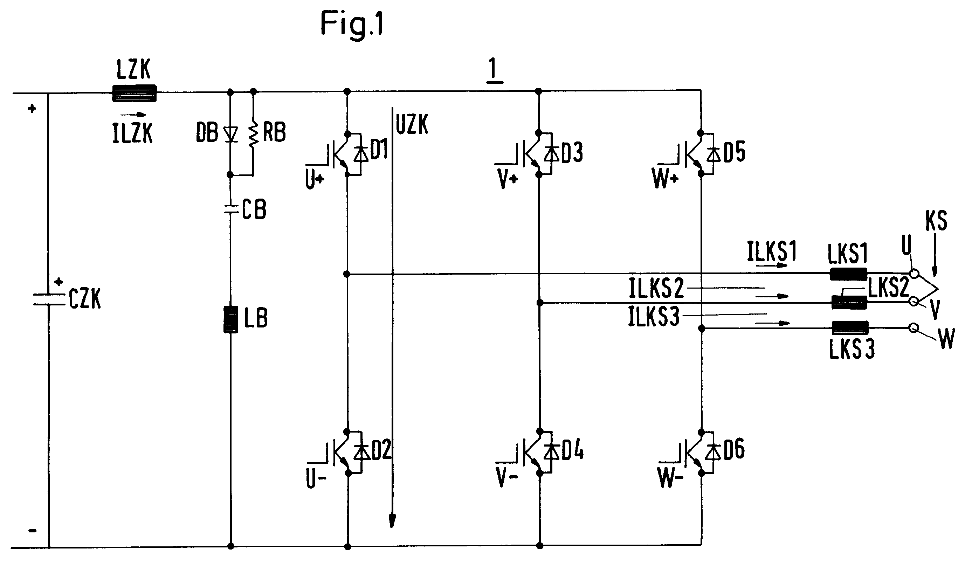

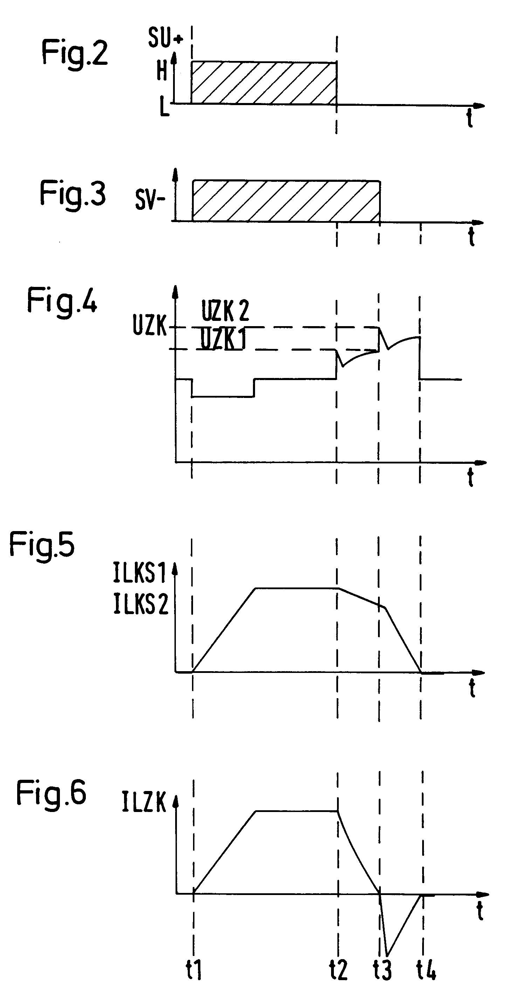

Ein derartiges Verfahren und eine derartige Vorrichtung zum Abschalten eines Überstromes bei einem Wechselrichter sind beispielsweise aus der etz Bd. 110 (1989), Heft 10, Seite 464 bis 471 bekannt (W. Bösterling, R. Jörke, M. Tscharn, "IGBT-Module in Stromrichtern: regeln, steuern, schützen"). Bei allen Schutzkonzepten für abschaltbare Halbleiterschalter mit Kurzschlußströmen größer als der Nennstrom, z.B. IGBTs (Insulated-Gate-Bipolar-Transistoren) werden Beschaltungskondensatoren großer Kapazität zur Aufnahme der Energie in der Zuleitungsinduktivität benötigt, damit der ausschaltende Halbleiterschalter nicht mit zu hoher Spannung belastet wird. Da diese Kondensatoren teuer sind, werden sie zweckmäßig für mehrere Halbleiterschalter verwendet (spannungsbegrenzende Summenbeschaltung auf der Gleichspannungsseite). Das bekannte Abschalten eines Kurzschlußstromes ist nachfolgend unter den Figuren 2 bis 6 in Verbindung mit Figur 1 behandelt. Dabei wird im bekannten Fall vorgeschlagen, alle den Kurzschlußstrom führenden Halbleiterschalter des Wechselrichters abzuschalten. Dies führt - wie nachstehend unter den Figuren 2 bis 6 näher ausgeführt - zu einer relativ hohen Spannungsbeanspruchung der abschaltenden Halbleiterschalter und damit zu aufwendigen, teuren Beschaltungen.

Der Erfindung liegt die Aufgabe zugrunde, ein Verfahren zum Abschalten eines Überstromes bei einem Wechselrichter anzugeben, bei dem die Spannungsbeanspruchung der abschaltenden Halbleiterschalter minimiert wird. Desweiteren soll eine Vorrichtung zur Durchführung des Verfahrens angegeben werden.

Diese Aufgabe wird bezüglich des Verfahrens in Verbindung mit den Merkmalen des Oberbegriffes erfindungsgemäß durch die im Kennzeichen des Anspruchs 1 angegebenen Merkmale gelöst.

Die Aufgabe wird bezüglich der Vorrichtung in Verbindung mit den Merkmalen des Oberbegriffes erfindungsgemäß durch die im Kennzeichen des Anspruchs 7 angegebenen Merkmale gelöst.

Die mit der Erfindung erzielbaren Vorteile bestehen insbesondere darin, daß infolge der Minimierung der Spannungsbeanspruchung der abschaltenden Halbleiterschalter auch der zur Spannungsbegrenzung erforderliche Beschaltungsaufwand minimiert wird. Im Vergleich zu üblichen Überstrom-Schutzkonzepten kann demzufolge z.B. der Aufwand wand für die spannungsbegrenzende Summenbeschaltung auf der Gleichspannungsseite herabgesetzt werden. Wird jedoch der Aufwand für diese Summenbeschaltung beibehalten, wird umgekehrt hierzu ein Betrieb der Halbleiterschalter bei höherer Spannung (Zwischenkreisgleichspannung) ermöglicht. Es wird stets ein gegenphasiges Schalten der am Überstrom beteiligten Halbleiterschalter zuverlässig verhindert.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: inen Pulswechselrichter mit Summenbeschaltung auf der Gleichspannungsseite und Kurzschlußinduktivitäten auf der Wechselspannungsseite,
- Fig. 2 bis 6: en zeitlichen Verlauf von interessierenden Ansteuerimpulsen, der Ventilgleichspannung, des Stromes über die Kurzschlußinduktivitäten und des Eingangsstromes jeweils bei üblicher Überstrom-Abschaltung,
- Fig. 7: en prinzipiellen Aufbau einer selektiven Überstromschutzeinrichtung,
- Fig. 8 bis 12: en zeitlichen Verlauf von interessierenden Ansteuerimpulsen, der Ventilgleichspannung, des Stromes über die Kurzschlußinduktivitäten und des Eingangsstromes jeweils bei selektiver Überstrom-Abschaltung,
- Fig. 13: ine Schaltung zur Ermittlung selektiver Abschaltsignale.

In Figur 1 ist ein Pulswechselrichter mit Summenbeschaltung auf der Gleichspannungsseite und Kurzschlußinduktivitäten auf der Wechselspannungsseite dargestellt. Es ist ein Pulswechselrichter 1 mit mit dem positiven Gleichspannungsanschluß verbundenen Halbleiterschaltern U+, V+, W+ sowie mit mit dem negativen Gleichspannungsanschluß verbundenen Halbleiterschaltern U-, V-, W- zu erkennen, wobei im Beispiel IGBTs als Halbleiterschalter verwendet werden. Jedem der Halbleiterschalter U+, U-, V+, V-, W+, W- liegt eine Diode (Freilaufdiode) D1, D2, D3, D4, D5, D6 antiparallel.

Der Pulswechselrichter 1 liegt gleichspannungsseitig an einem Gleichspannungszwischenkreis mit einer zwischen beiden Gleichsspannungsanschlüssen angeordneten Zwischenkreiskapazität CZK. Die durch die Leitungen zwischen CZK und den Schaltern bedingte und unvermeidbare Induktivität der Hauptstromkreise ist mit LZK und der Eingangsstrom ist mit ILZK bezeichnet. Am positiven Gleichspannungsanschluß liegen ein Widerstand RB sowie eine Diode DB mit ihrer Anode. Die Diode DB und der Widerstand RB sind andererseits zusammengeschaltet und führen über einen Kondensator CB zum negativen Gleichspannungsanschluß (Reihenschaltung kann auch vertauscht werden). Die Bauelemente CG, DB und RB stellen eine Summenbeschaltung auf der Gleichspannungsseite zur Reduzierung von Überspannungen und somit zum Schutz der Halbleiterschalter dar. Die Induktivität dieser Summenbeschaltung ist mit LB bezeichnet. Die Ventilgleichspannung über einem Zweigpaar U+/U- oder V+/V- oder W+/W- ist mit UZK bezeichnet.

Im Zuge der Wechselspannungsanschlüsse U, V, W des Pulswechselrichters 1 sind Kurzschlußinduktivitäten LKS1, LKS2, LKS3 angeordnet. Die Ströme über diese Kurzschlußinduktivitäten sind mit ILKS1, ILKS2, ILKS3 bezeichnet.

Für die nachfolgenden Betrachtungen wird angenommen, daß ein Kurzschluß KS zwischen U und V auftritt (überbrückte Ausgänge).

In den Figuren 2 bzw. 3 sind die zeitlichen Verläufe der Ansteuerimpulse SU+ bzw. SV- für die Halbleiterschalter U+ bzw. V-, in Figur 4 ist der zeitliche Verlauf der Ventilgleichspannung UZK, in Figur 5 ist der zeitliche Verlauf der Ströme ILKS1 = -ILKS2 über die Kurzschlußinduktivitäten LKS1 und LKS2 sowie in Figur 6 ist der zeitliche Verlauf des Eingangsstromes ILZK jeweils bei üblicher Überstromabschaltung dargestellt.

Das Abschalten des Kurzschlußstromes über die Ausgangsphasen U,V hat z.B. folgenden zeitlichen Verlauf: Zum Zeitpunkt t1 (Kurzschluß beginnt) sind die beiden den Überstrom führenden Halbleiterschalter U+ und V- eingeschaltet, d.h. die Ansteuerimpulse SU+ und SV- weisen den Wert H (= High) auf. Folglich erreicht der vom positiven Gleichspannungsanschluß über U+, LKS1, LKS2, V- zum negativen Gleichspannungsanschluß fließende Kurzschlußstrom seinen maximalen Wert (siehe Ströme gemäß Figuren 5 und 6). Zum Zeitpunkt t2 wird der Halbleiterschalter U+ ausgeschaltet (SU+ = L= Low). Nachfolgend verläuft ILZK, d.h. der Strom in der positiven Gleichspannungszuleitung, nach Null. Es ergibt sich ein Freilaufstrom über LKS1, LKS2, V- und D2 (siehe Strom gemäß Figur 5).

Andererseits steigt jedoch die Ventilgleichspannung UZK auf den Wert UZK1. Zum Zeitpunkt t3 wird der Halbleiterschalter V- ausgeschaltet (SV- = L). Nachfolgend ergibt sich ein Strom über LKS1, LKS2, D3, CZK und D2, d.h. der Strom erreicht seinen Freilauf nur noch über CZK. Da die Ventilgleichspannung UZK bereits größer als die Spannung an CZK ist und der Strom über CZK in Gegenrichtung aufgebaut werden muß (siehe Figur 6), wird der Halbleiterschalter V- während des Ausschaltens mit einer stark erhöhten Ausschaltspannung belastet (siehe Figur 4: UZK weist zum Zeitpunkt t3 den Wert UZK2 mit UZK2 größer UZK1 auf). Die Zeitspanne zwischen den Zeitpunkten t2 und t3 kann beliebig sein, wobei die Zeitpunkte t2 und t3 auch zusammenfallen können. Zum Zeitpunkt t4 weisen die Ströme ILKS1 = -ILKS2 und ILZK den Wert Null auf, d.h. der Kurzschlußstrom ist abgeschaltet.

Wie vorstehend bereits erwähnt, soll die Ausschaltung des den Überstrom führenden zweiten Halbleiterschalters verhindert werden, was durch eine selektive Abschaltung erreicht wird. Gleichzeitig wird durch diese selektive Abschaltung die Abschaltung eines von zwei den Überstrom führenden Halbleiterschaltern ermöglicht.

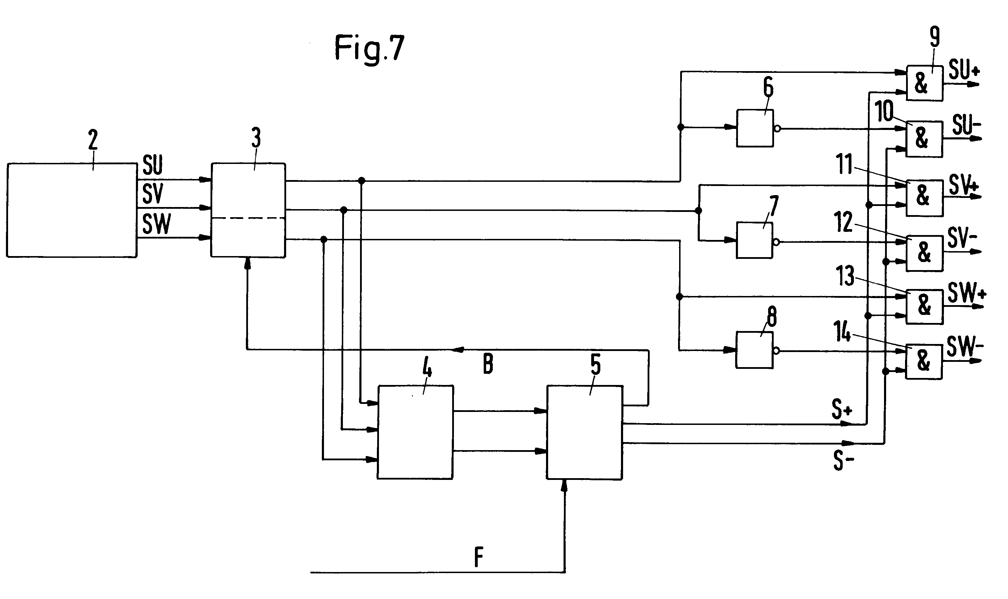

Figur 7 zeigt hierzu den prinzipiellen Aufbau einer selektiven Überstromschutzeinrichtung. Es ist ein übergeordneter Logikkreis 2 inklusive Regler zu erkennen, der die Ansteuersignale SU bzw. SV bzw. SW für beide Halbleiterschalter U+/U- bzw. V+/V- bzw. W+/W- eines Zweigpaares vorgibt. Diese Ansteuersignale SU, SV, SW gelangen über einen Verriegelungs/Blockierungsblock 3 zu einem Auswahllogikkreis 4 sowie zu Invertern 6, 7, 8 und UND-Gattern 9, 11, 13. Im einzelnen wird das Ansteuersignal SU über den Block 3 zu einem Inverter 6 und dem ersten Eingang eines UND-Gatters 9 geleitet. Das Ansteuersignal SV wird über den Block 3 einem Inverter 7 und dem ersten Eingang eines UND-Gatters 11 zugeführt. Das Ansteuersignal SW gelangt über den Block 3 zu einem Inverter 8 und zum ersten Eingang eines UND-Gatters 13. Die Ausgangssignale der Inverter 6 bzw. 7 bzw. 8 werden jeweils den ersten Eingängen von UND-Gattern 10 bzw. 12 bzw. 14 zugeführt.

Die jeweils zweiten Eingänge der UND-Gatter 9, 11 und 13 sind mit selektiven Abschaltsignalen S+ sowie die jeweils zweiten Eingänge der UND-Gatter 10, 12, 14 sind mit selektiven Abschaltsignalen S- beaufschlagbar.

Die selektiven Abschaltsignale S+, S- werden von einer Ablaufsteuerung 5 abgegeben, der eingangsseitig Signale des Auswahllogikkreises 4 sowie Fehlermeldesignale F zuführbar sind und die Blockierungssignale B an den Block 3 abgeben kann.

Weisen die selektiven Abschaltsignale S+ den Wert H auf, so wird der momentane Einschaltzustand der mit dem positiven Gleichspannungsanschluß verbundenen Halbleiterschalter U+, V+, W+ beibehalten oder diese Halbleiterschalter können einschalten. Weisen die selektiven Abschaltsignale S+ den Wert L auf, so werden die momentan eingeschalteten, mit dem positiven Gleichspannungsanschluß verbundenen Halbleiterschalter U+, V+, W+ ausgeschaltet.

Weisen die selektiven Abschaltsignale S- den Wert H auf, so wird der momentane Einschaltzustand der mit dem negativen Gleichspannungsanschluß verbundenen Halbleiterschalter U-, V-, W- beibehalten oder diese Halbleiterschalter können einschalten. Weisen die selektiven Abschaltsignale S- den Wert L auf, so werden die momentan eingeschalteten, mit dem negativen Gleichspannungsanschluß verbundenen Halbleiterschalter U-, V-, W- ausgeschaltet.

Dem UND-Gatter 9 ist ausgangsseitig der Ansteuerimpuls SU+ für den Halbleiterschalter U+ entnehmbar. In analoger Weise sind den weiteren UND-Gattern 10 bzw. 11 bzw. 12 bzw. 13 bzw. 14 Ansteuerimpulse SU- für den Halbleiterschalter U- bzw. Ansteuerimpulse SV+ für den Halbleiterschalter V+ bzw. Ansteuerimpulse SV- für den Halbleiterschalter V- bzw. Ansteuerimpulse SW+ für den Halbleiterschalter W+ bzw. Ansteuerimpulse SW- für den Halbleiterschalter W- entnehmbar. Die Ansteuerimpulse gelangen jeweils über Treiberstufen (evtl. Potentialtrennungsstufen) zu den einzelnen Halbleiterschaltern.

Im ungestörten Normalbetrieb wird das Ein- und Ausschalten der einzelnen Halbleiterschalter durch den Logikkreis 2 in Verbindung mit den Invertern 6 bis 8 und UND-Gattern 9 bis 14 bestimmt. Der Block 3 ist für die Ansteuersignale SU, SV, SW durchlässig, wobei ein gegenphasiges Schalten von zwei Ausgangsphasen (z.B. SU: L→H, SV: H→L) während einer gewissen Zeit verhindert wird. Die selektiven Abschaltsignale S+ und S- weisen konstant den Wert H auf. Falls ein Überstrom (Kurzschluß) auftritt, wird dies durch das Fehlermeldesignal F mit dem Wert H an die Ablaufsteuerung 5 gemeldet. Die Erfassung des Überstromes kann dabei beispielsweise unter Einsatz von im Zuge der Phasen U, V, W angeordneten Stromerfassungseinrichtungen erfolgen, die einen über dem Nennwert liegenden Stromfluß melden. Alternativ hierzu können auch Stromerfassungseinrichtungen auf der Gleichspannungsseite oder in Serie zu jedem einzelnen Halbleiterschalter angeordnet sein. Da ein Kurzschluß prinzipiell zu einem beliebigen Zeitpunkt auftreten kann, ist es möglich, daß - bedingt durch die Totzeit der Kurzschlußerfassung und -meldung - einer der am Kurzschluß beteiligten, d.h. den Überstrom selbst führenden Halbleiterschalter durch den übergeordneten Logikkreis 2 bereits routinemäßig abgeschaltet wurde. Der zweite den Kurzschluß führenden Halbleiterschalter darf dann nicht mehr abgeschaltet werden, um zu verhindern, daß dieser Halbleiterschalter einer überhöhten Spannungsbelastung ausgesetzt wird (siehe UZK2 in Figur 4).

Beim Auftreten eines Fehlermeldesignals F "Kurzschluß" gibt die Ablaufsteuerung 5 ein Blockierungssignal B mit dem Wert H an den Verriegelungs/Blockierungsblock 3 ab. Hierdurch werden die momentan vom Logikkreis 2 vorgegebenen Ansteuersignale SU, SV, SW festgehalten ("eingefroren"), d.h. gespeichert und den Invertern 6 bis 8, UND-Gattern 9 bis 14 sowie dem Auswahllogikkreis 4 unverändert vorgegeben.

Der Auswahllogikkreis 4 erkennt aus den zugeleiteten festgehaltenen Ansteuersignalen SU, SV, SW, ob die positive oder die negative Phasenhälfte gesperrt (abgeschaltet) werden muß. Im Gegensatz zu bisher üblichen Überstrom-Schutzkonzepten erfolgt nur eine selektive Sperrung, d.h. Abschaltung der positiven oder negativen Phasenhälfte bzw. oberen oder unteren Brückenhälfte. Soll die positive Phasenhälfte abgeschaltet werden, weisen das Abschaltsignal S+ den Wert L und das Abschaltsignal S- den Wert H auf, d.h. nachfolgend werden die momentan eingeschalteten Halbleiterschalter U+, V+, W+ abgeschaltet, während die Halbleiterschalter U-, V-, W- ihren momentanen Schaltzustand beibehalten. Soll die negative Phasenhälfte abgeschaltet werden, weisen das Abschaltsignal S+ den Wert H und das Abschaltsignal S- den Wert L auf, d.h. nachfolgend werden die momentan eingeschalteten Halbleiterschalter U-, V-, W- abgeschaltet, während die Halbleiterschalter U+, V+, W+ ihren momentanen Schaltzustand beibehalten.

Bei einem dreiphasigen Wechselrichter mit entsprechender Schutzbeschaltung, wie in den Figuren 1 und 7 dargestellt, kann durch den Auswahllogikkreis 4 z.B. eine einfache "2aus3"-Auswahl erfolgen, um die Ablaufsteuerung 5 zur Abgabe der entsprechenden selektiven Abschaltsignale S+, S- zu aktivieren. Tritt der Überstrom in einem Zeitraum auf, in dem zwei Ansteuersignale von drei Ansteuersignalen SU, SV, SW den Wert H aufweisen, wird die negative Phasenhälfte gesperrt (abgeschaltet), d.h. das Abschaltsignal S+ hat den Wert H und das Abschaltsignal S- hat den Wert L. Tritt der Überstrom in einem Zeitraum auf, in dem zwei Ansteuersignale von drei Ansteuersignalen SU, SV, SW den Wert L aufweisen, so wird die positive Phasenhälfte abgeschaltet, d.h. das Abschaltsignal S+ hat den Wert L und das Abschaltsignal S- hat den Wert H.

Bei einem Wechselrichter mit einer beliebigen Phasenanzahl kann die Entscheidung, ob die Halbleiterschalter der positiven oder der negativen Phasenhälfte abgeschaltet werden müssen, durch Speicherung der letzten Umschaltung (z.B. der letzten Einschaltung eines Halbleiterschalters) vor dem Auftreten des Fehlermeldesignals F erfolgen. Wurde bei dieser letzten Umschaltung ein Halbleiterschalter der positiven Phasenhälfte eingeschaltet (Wert wechselt von L nach H), so wird folglich die negative Phasenhälfte gesperrt (S+ hat den Wert H, S- hat den Wert L). Wurde bei der letzten Umschaltung ein Halbleiterschalter der negativen Phasenhälfte eingeschaltet, so wird folglich die positive Phasenhälfte abgeschaltet (S+ hat den Wert L, S- hat den Wert H).

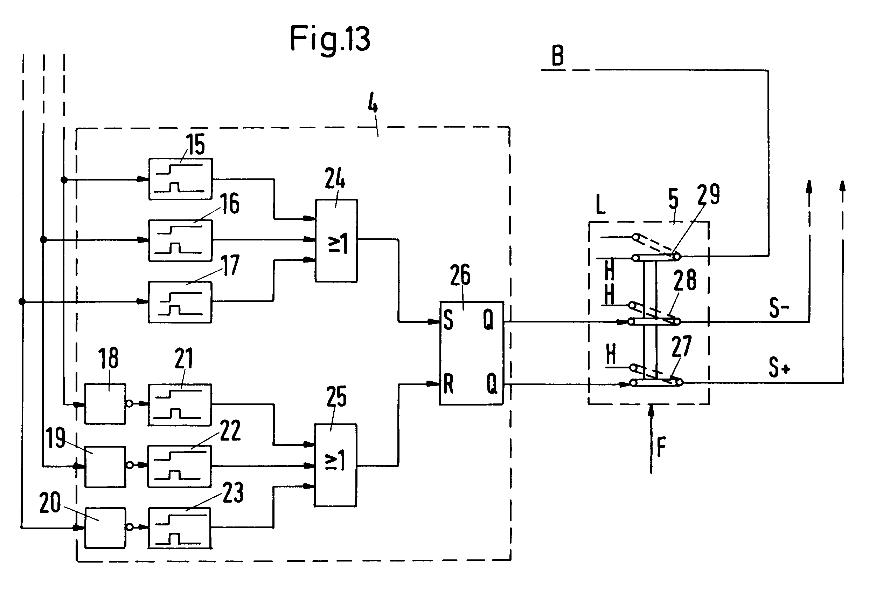

In Figur 13 ist eine Schaltung zur Ermittlung selektiver Abschaltsignale dargestellt, wie sie bei einem vorstehend erwähnten Wechselrichter mit beliebiger Phasenanzahl eingesetzt werden kann. Die Ausgangssignale des Verriegelungs/Blockierungsblocks 3 werden Monoflops 15, 16 17 und über vorgeschaltete Inverter 18, 19, 20 weiteren Monoflops 21, 22, 23 zugeführt. Die Monoflops geben jeweils einen Kurzimpuls an den Eingang eines zugeordneten ODER-Gatters ab, wenn das entsprechende Ansteuersignal SU, SV, SW eine positive Flanke aufweist (Wechsel von L nach H, d.h. Einschaltung des entsprechenden Halbleiterschalters). Im einzelnen sind die Ausgänge der Monoflops 15, 16, 17 mit dem ODER-Gatter 24 und die Ausgänge der Monoflops 21, 22, 23 mit dem ODER-Gatter 25 verbunden. Der Ausgang des ODER-Gatters 24 führt zum Setzeingang S eines RS-Kippgliedes 26, während der Ausgang des ODER-Gatters 25 am Rücksetzeingang R dieses Kippgliedes 26 liegt. Auf diese Art und Weise wird die letzte Einschaltung eines Halbleiterschalters gespeichert und am Q-Ausgang des RS-Kippgiedes 26 steht ein Signal mit dem Wert H an, falls ein Halbleiterschalter der positiven Phasenhälfte zuletzt eingeschaltet wurde und es steht ein Signal mit dem Wert L an, falls ein Halbleiterschalter der negativen Phasenhälfte zuletzt eingeschaltet wurde. Das Signal am Q̅-Ausgang des RS-Kippgliedes 26 ist stets invers zum Signal am Q-Ausgang. Die Baukomponenten 15 bis 26 stellen einen Auswahllogikkreis 4 dar.

Das Signal am Q-Ausgang des RS-Kippgliedes 26 stellt das selektive Abschaltsignal S- bei Vorliegen eines Fehlermeldesignals F dar. Analog hierzu entspricht das Signal am Q̅-Ausgang des RS-Kippgliedes dem selektiven Abschaltsignal S+. Eine einfach aufgebaute Ablaufsteuerung 5 weist deshalb drei Umschalter 27, 28, 29 auf, wobei Umschalter 27 das Abschaltsignal S+, Umschalter 28 das Abschaltsignal S- und Umschalter 29 das Blockierungssignal B abgeben. Bei Vorliegen eines Fehlermeldesignals F schalten die Umschalter 27 bzw. 28 die an den Ausgängen Q bzw. Q̅ des RS-Kippgliedes 26 anstehenden Signale durch, während der Umschalter 29 ein Signal mit dem Wert H durchschaltet. Liegt jedoch kein Fehlermeldesignal F mit dem Wert H vor, schalten die Umschalter 27 und 28 Signale mit dem Wert H durch, während der Umschalter 29 ein Signal mit dem Wert L weitergibt.

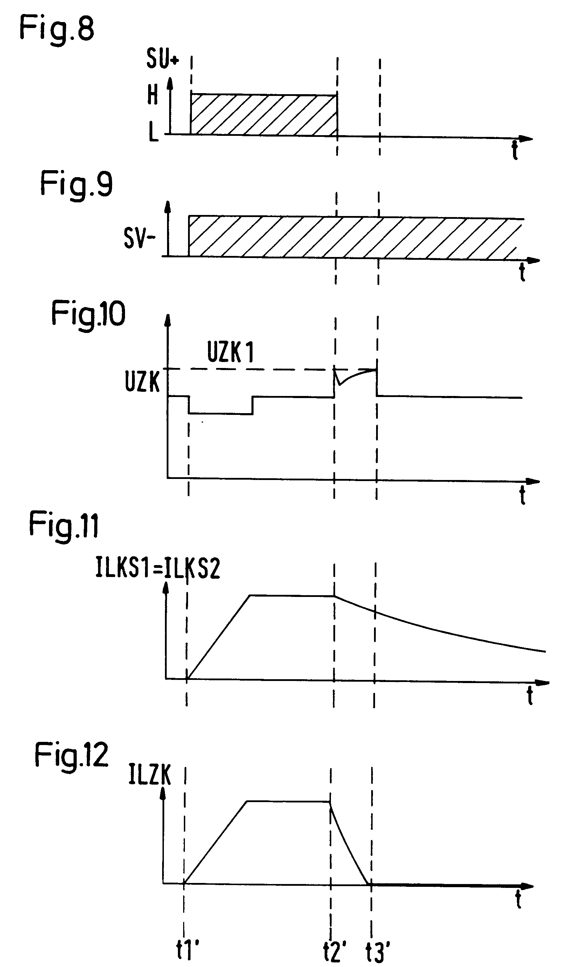

In den Figuren 8 bzw. 9 sind die zeitlichen Verläufe der Ansteuerimpulse SU+ bzw SV- für die Halbleiterschalter U+ bzw. V-, in Figur 10 ist der zeitliche Verlauf der Ventilgleichspannung UZK, in Figur 11 ist der zeitli che Verlauf der Ströme ILKS1 = -ILKS2 über die Kurzschlußinduktivitäten LKS1 und LKS2 sowie in Figur 12 ist der zeitliche Verlauf des Eingangsstromes ILZK jeweils bei selektiver Überstrom-Abschaltung dargestellt.

Zum Zeitpunkt t1′ sind die beiden am Kurzschluß direkt beteiligten Halbleiterschalter U+ und V- eingeschaltet, d.h. die Ansteuerimpulse SU+ und SV- weisen den Wert H auf. Folglich erreicht der vom positiven Gleichspannungsanschluß über U+, LKS1, LKS2, V- zum negativen Gleichspannungsanschluß fließende Kurzschlußstrom seinen maximalen Wert (siehe Ströme gemäß Figuren 11 und 12). Zum Zeitpunkt t2′ wird routinemäßig über den Logikkreis 2 oder über die vorstehend beschriebene selektive Abschalteinrichtung der Halbleiterschalter U+ ausgeschaltet (SU+ hat den Wert L). Nachfolgend verläuft ILZK, d.h. der Strom in der positiven Gleichspannungszuleitung, nach Null. Es ergibt sich ein Freilaufstrom über LKS1, LKS2, V- und D2 (siehe Strom gemäß Figur 11). Die Ventilgleichspannung UZK steigt auf den Wert UZK1 an. Die routinemäßige Ausschaltung des Halbleiterschalters V- zum Zeitpunkt t3′ wird durch die selektive Überstrom-Abschaltung verhindert, d.h. der Ansteuerimpuls SV- behält den Wert H bei. Dadurch wird verhindert, daß der Halbleiterschalter V- mit einer stark erhöhten Spannung vom Wert UZK2 belastet wird und daß die Summenbeschaltung für diesen erhöhten Spannungswert auszulegen ist.

Zu den Einrichtungen gemäß Figuren 7 und 13 ist allgemein anzumerken, daß die Logik zweckmäßig in Form einzelner Funktionsblöcke verwirklicht wird, wobei einzelne Funktionsblöcke auch gemeinsam realisiert sein können.

## Patentansprüche

1. Verfahren zum Abschalten eines Überstromes bei einem an einer Gleichspannungsquelle betriebenen Wechselrichter in Brükkenschaltung, der abschaltbare Halbleiterschalter mit parallelgeschalteten Dioden aufweist und mit einem Eingangskondensator versehen ist, dadurch gekennzeichnet, daß lediglich einer von zwei den Überstrom führenden, gegenphasig angeordneten Halbleiterschaltern abgeschaltet wird, indem entweder nur der mit dem positiven Gleichspannungsanschluß oder nur der mit dem negativen Gleichspannungsanschluß verbundene Halbleiterschalter selektiv abgeschaltet wird, während der Schaltzustand des jeweils weiteren Halbleiterschalters unverändert bleibt.

2. Verfahren nach Anspruch 1, dadurch gekennzeichnet, daß nach Auftreten bzw. Melden eines Überstromes eine selektive Abschaltung einer Phasenhälfte erfolgt, indem entweder alle mit dem positiven Gleichspannungsanschluß oder alle mit dem negativen Gleichspannungsanschluß verbundenen Halbleiterschalter selektiv abgeschaltet werden, während der Schaltzustand der jeweils weiteren Halbleiterschalter unverändert bleibt.

3. Verfahren nach Anspruch 2, dadurch gekennzeichnet, daß die Selektion der abzuschaltenden Phasenhälfte bei einem dreiphasigen Wechselrichter in Abhängigkeit einer "2 aus 3-Auswahl" der Schaltzustände der Halbleiterschalter des Wechselrichters bei Auftreten bzw. Melden des Überstromes erfolgt.

4. Verfahren nach Anspruch 2, dadurch gekennzeichnet, daß zur Selektion der abzuschaltenden Phasenhälfte eine Speicherung der letzten Umschaltung eines Halbleiterschalters vor Auftreten bzw. Melden des Überstroms erfolgt.

5. Verfahren nach Anspruch 2, dadurch gekennzeichnet, daß alle mit dem positiven Gleichspannungsanschluß verbundene Halbleiterschalter selektiv abgeschaltet werden, wenn ein mit dem negativen Gleichspannungsanschluß verbundener Halbleiterschalter vor dem Auftreten bzw. Melden des Überstroms zuletzt eingeschaltet wurde.

6. Verfahren nach Anspruch 2, dadurch gekennzeichnet, daß alle mit dem negativen Gleichspannungsanschluß verbundenen Halbleiterschalter selektiv abgeschaltet werden, wenn ein mit dem positiven Gleichspannungsanschluß verbundener Halbleiterschalter vor dem Auftreten bzw. Melden des Überstromes zuletzt eingeschaltet wurde.

7. Vorrichtung zum Abschalten eines Überstromes bei einem an einer Gleichspannungsquelle betriebenen Wechselrichter in Brückenschaltung, der abschaltbare Halbleiterschalter mit parallelgeschalteten Dioden aufweist und mit einem Eingangskondensator versehen ist, dadurch gekennzeichnet, daß ein Verriegelungs/Blockierungsblock (3) vorhanden ist, der ein gegenphasiges Schalten eines mit dem positiven Gleichspannungsanschluß und eines mit dem negativen Gleichspannungsanschluß verbundenen Halbleiterschalters während einer bestimmten Zeit verhindert und mit dessen Hilfe die nach Auftreten bzw. Melden eines Überstromes momentan bestehenden Schaltzustände der Halbleiterschalter festhaltbar sind, und daß ein Auswahllogikkreis (4) vorhanden ist, der aus den festgehaltenen Schaltzuständen der Halbleiterschalter die abzuschaltende Phasenhälfte ermittelt sowie eine Abschaltung der Halbleiterschalter dieser Phasenhälfte veranlaßt.

8. Vorrichtung nach Anspruch 7, dadurch gekennzeichnet, daß die Ansteuerimpulse für die Halbleiterschalter UND-Gattern (9 bis 14) entnehmbar sind, die als jeweils erste Eingangsgröße Signale von einem übergeordneten Logikkreis mit Reglern (2) empfangen - wobei die Signale des Logikkreises mit Reglern (2) über den Verriegelungs/Blockierungsblock (3) geführt werden - und die als zweite Eingangsgrößen die von dem Auswahllogikkreis (4) gebildeten selektiven Abschaltsignale (S+, S-) für die positive bzw. negative Phasenhälfte empfangen.

9. Vorrichtung nach Anspruch 7 und/oder 8, dadurch gekennzeichnet, daß eine Ablaufsteuerung (5) vorgesehen ist, die ein den Überstrom meldendes Fehlermeldesignal (F) empfängt, ein Blockierungssignal (B) an den Verriegelungs/Blockierungsblock (3) abgibt und die selektiven Abschaltsignale (S+, S-) des Auswahllogikkreises (4) an die Halbleiterschalter durchschaltet.

## Claims

1. Method for cutting off an overcurrent in a power inverter in a bridge circuit, which power inverter is driven by a direct voltage source, has semiconductor switches that can be cut off and have diodes connected in parallel, and is provided with an input capacitor, characterised in that only one of two semiconductor switches arranged with opposite phase and carrying the overcurrent is cut off in that either only the semiconductor switch connected to the positive direct voltage terminal or only the semiconductor switch connected to the negative direct voltage terminal is selectively cut off, while the switching state of the respective further semiconductor switch remains unchanged.

2. Method according to Claim 1, characterised in that a selective cut-off of one phase half is effected after the occurrence and reporting of an overcurrent, in that either all semiconductor switches connected to the positive direct voltage terminal or all semiconductor switches connected to the negative direct voltage terminal are selectively cut off, while the switching state of the respective further semiconductor switches remains unchanged.

3. Method according to Claim 2, characterised in that the phase half to be cut off is selected in a three-phase power inverter depending on a "2 from 3 selection" of the switching states of the semiconductor switches of the power inverter when the overcurrent occurs and is reported.

4. Method according to Claim 2, characterised in that, for selecting the phase half to be cut off, the last changeover of a semiconductor switch before the occurrence and reporting of the overcurrent is stored.

5. Method according to Claim 2, characterised in that all the semiconductor switches connected to the positive direct voltage terminal are cut off selectively if a semiconductor switch connected to the negative direct voltage terminal was turned on last before the occurrence and reporting of the overcurrent.

6. Method according to Claim 2, characterised in that all the semiconductor switches connected to the negative direct voltage terminal are cut off selectively if a semiconductor switch connected to the positive direct voltage terminal was turned on last before the occurrence and reporting of the overcurrent.

7. Device for cutting off an overcurrent in a power inverter in a bridge circuit, which power inverter is driven by a direct voltage source, has semiconductor switches that can be cut off and have diodes connected in parallel, and is provided with an input capacitor, characterised in that an inhibiting/blocking block (3) is present which prevents an opposite-phase switching of a semiconductor switch connected to the positive direct voltage terminal and of a semiconductor switch connected to the negative direct voltage terminal during a given period of time and with the aid of which the currently existing switching states of the semiconductor switches can be retained after the occurrence and reporting of an overcurrent, and in that a selection logic circuit (4) is present which determines the phase half to be cut off from the retained switching states of the semiconductor switches and also initiates a cut-off of the semiconductor switches of this phase half.

8. Device according to Claim 7, characterised in that the drive pulses for the semiconductor switches can be picked up at AND gates (9 to 14), which receive as respective first input values signals from a superordinate logic circuit with controllers (2) - the signals of the logic circuit with controllers (2) being fed via the inhibiting/blocking block (3) - and which receive as second input values the selective cut-off signals (S+, S-) formed by the output logic circuit (4) for the positive and negative phase half respectively.

9. Device according to Claim 7 and/or 8, characterised in that an execution controller (5) is provided which receives an error message signal (F) reporting the overcurrent, outputs a blocking signal (B) to the inhibiting/blocking block (3) and switches through the selective cut-off signals (S+, S-) of the selection logic circuit (4) to the semiconductor switches.

## Revendications

1. Procédé de coupure en cas de surintensité dans un onduleur à circuit en pont fonctionnant à partir d'une source de tension continue, comportant des commutateurs à semi-conducteurs avec des diodes branchées en parallèle et un condensateur d'entrée qui peuvent être amenés à l'état bloquant, caractérisé par le fait que seul un commutateur parmi deux commutateurs à semi-conducteurs montés en opposition de phase et parcourus par la surintensité est amené à l'état bloquant en ouvrant de manière sélective, soit seulement le commutateur à semiconducteurs connecté à la borne de tension positive soit seulement le commutateur à semi-conducteurs connecté à la borne de tension négative, tandis que l'état de commutation de l'autre commutateur à semi-conducteurs reste inchangé.

2. Procédé selon la revendication 1, caractérisé par le fait qu'après apparition ou indication d'une surintensité on procéde à une coupure sélective d'une demi-phase en coupant de manière sélective soit tous les commutateurs à semi-conducteurs connectés à la borne de tension positive, soit tous les commutateurs à semi-conducteurs connectés à la borne de tension négative, tandis que l'état de commutation de l'autre commutateur à semi-conducteurs reste inchangé.

3. Procédé selon la revendication 2, caractérisé par le fait que la sélection de la demi-phase à couper dans un onduleur triphasé est opérée en fonction d'un choix "2 sur 3" pour les états de commutation des commutateurs à semi-conducteurs de l'onduleur lors de l'apparition ou de l'indication de la surintensité.

4. Procédé selon la revendication 2, caractérisé par le fait que pour sélectionner la demi-phase à couper on mémorise la dernière commutation d'un commutateur à semi-conducteurs avant l'apparition ou l'indication de la surintensité.

5. Procédé selon la revendication 2, caractérisé par le fait que l'on amène de manière sélective à l'état bloquant tous les commutateurs à semi-conducteurs connectés à la borne de tension positive lorsqu'un commutateur connecté à la borne de tension négative était en position passante avant l'apparition ou l'indication de la surintensité.

6. Procédé selon la revendication 2, caractérisé par le fait que l'on amène de manière sélective à l'état bloquant tous les commutateurs à semi-conducteurs connectés à la borne de tension négative lorsqu'un commutateur connecté à la borne de tension positive était en position passante avant l'apparition ou l'indication de la surintensité.

7. Dispositif de coupure en cas de surintensité dans un onduleur à circuit en pont fonctionnant à partir d'une source de tension continue, comportant des commutateurs à semi-conducteurs avec des diodes branchées en parallèle et un condensateur d'entrée qui peuvent être amenés à l'état bloquant, caractérisé par le fait qu'il est prévu un module de verrouillage/ blocage (3) qui interdit pendant une durée déterminée une commutation en opposition de phase d'un commutateur à semi-conducteurs connecté à la borne de tension positive et d'un commutateur à semi-conducteurs connecté à la borne de tension négative et au moyen duquel les états de commutation des commutateurs à semi-conducteurs existant momentanément après l'apparition ou l'indication d'une surintensité peuvent être maintenus et par le fait qu'il est prévu un circuit logique (4) de sélection qui, à partir des états de commutation maintenus des commutateurs à semi-conducteurs, détermine la demi-phase à couper et déclenche une coupure des commutateurs à semiconducteurs de ladite demi-phase.

8. Dispositif selon la revendication 7, caractérisé par le fait que les impulsions de commande pour les commutateurs à semi-conducteurs sont fournies par des portes ET (9 à 14) qui reçoivent chacune comme première grandeur d'entrée des signaux provenant d'un circuit logique supérieur avec des régulateurs (2) - les signaux du circuit logique à régulateurs (2) étant acheminés par l'intermédiaire du module de verrouillage/ blocage (3) - et comme seconde grandeur d'entrée les signaux sélectifs de coupure (S+, S-) formés par le circuit logique (4) de sélection pour la demi-phase positive et la demi-phase négative.

9. Dispositif selon la revendication 7 et/ou la revendication 8, caractérisé par le fait qu'il est prévu une commande de processus (5) qui reçoit un signal (F) d'indication de défaut qui indique une surintensité, délivre un signal de blocage (B) au module de verrouillage/blocage (3) et transmet aux commutateurs à semi-conducteurs les signaux sélectifs de coupure (S+, S-) du circuit logique de sélection (4).
